# EUROPÄISCHE PATENTSCHRIFT

(11) **EP 2 477 470 B1**
(45) Veröffentlichungstag und Bekanntmachung des Hinweises auf die Patenterteilung: **28.09.2016**
(21) Anmeldenummer: 10724296.8
(22) Anmeldetag: 28.05.2010
(51) Int. Cl.: A01B 76/00

(54) **LANDWIRTSCHAFTLICHE ARBEITSMASCHINE**
AGRICULTURAL WORKING MACHINE
MACHINE AGRICOLE

(30) Priorität: 15.09.2009 DE 102009044004
(43) Veröffentlichungstag der Anmeldung: 25.07.2012
(73) Patentinhaber: Amazonen-Werke H. Dreyer GmbH & Co. KG, 49205 Hasbergen (DE)
(72) Erfinder: POKRIEFKE, Michael, 27798 Hude (DE); ASCHE, Ingo, 27798 Hude (DE)
(86) Internationale Anmeldenummer: PCT/EP2010/003281
(87) Internationale Veröffentlichungsnummer: WO 2011/032612

(56) Entgegenhaltungen:
- DE-A1-102007 023 157
- DE-B1- 2 408 872
- DE-U1-202009 004 872

## Beschreibung

Die Erfindung betrifft eine landwirtschaftliche Bodenbearbeitungswerkzeuge aufweisende Arbeitsmaschine gemäß des Oberbegriffes des Patentanspruches 1.

Der Oberbegriff von Anspruch 1 geht aus DE 2408872 hervor.

Derartige landwirtschaftliche Bodenbearbeitungswerkzeuge aufweisende Arbeitsmaschinen sind in der Praxis bekannt. Sie werden in der Landwirtschaft u. a. zum Bearbeiten von Bodenflächen und zum Einbringen von Saat in den Boden eingesetzt. Um wirtschaftlich arbeiten zu können, müssen diese Arbeitsmaschinen auch bei Dunkelheit eingesetzt werden. Nur so ist genügend Arbeitszeit vorhanden, damit diese teuren Arbeitsmaschinen wirtschaftlich in der Landwirtschaft zum Erzeugen von landwirtschaftlichen Produkten eingesetzt werden können.

Um die Arbeit der Bodenbearbeitungswerkzeuge und die Bewegung des Bodens durch die Bodenbearbeitungswerkzeuge auch bei Dunkelheit erkennen zu können, hat man sich bisher damit beholfen, an dem Schlepper oder der Arbeitsmaschine selbst lichtstarke Scheinwerfer anzubringen und die gesamte Arbeitsmaschine zu beleuchten. Diese Anstrahlung der Maschinen aus größerer Entfernung durch die vorbenannten Scheinwerfer ist jedoch unbefriedigend und sehr energieaufwendig. Durch die starke Reflektion des Lichtes von den Rahmenteilen der Maschine kann die Arbeit der Bodenbearbeitungswerkzeuge nur schwer von dem Fahrer des die Maschine ziehenden Schleppers erkannt werden.

Der Erfindung liegt die Aufgabe zugrunde, mit einfachen Mitteln eine verbesserte Ausleuchtung des Arbeitsbereiches von Bodenbearbeitungswerkzeugen, die als Säschare, Grubberzinken etc. ausgebildet sein können, in für den Fahrer des die Arbeitsmaschine ziehenden Schleppers deutlicher sichtbar und leichter erkennbar zu machen.

Diese Aufgabe wird erfindungsgemäß dadurch gelöst, dass die zumindest eine Lichtquelle so im Bereich des Rahmens angeordnet ist, dass nur der Bereich der Bodenbearbeitungswerkzeuge und deren Arbeitsbereiche ausgeleuchtet wird. Infolge dieser Maßnahme wird nur der von dem Bodenbearbeitungswerkzeug tatsächlich bearbeitete Bodenbereich ausgeleuchtet. Durch die Ausleuchtung nur dieses Bereiches wird der Blick des Fahrers des die Arbeitsmaschine Ackerschlepper quasi nur auf diesen ausgeleuchteten Arbeitsbereich fokussiert. Der Fahrer wird bei der Beobachtung der Arbeit der Bodenbearbeitungswerkzeuge und des Arbeitsbereiches nicht durch zusätzliche ausgeleuchtete Bereiche der Arbeitsmaschine von der Überwachung des Arbeitsergebnisses durch die Bodenbearbeitungswerkzeuge abgelenkt. Der beleuchtete Arbeitsbereich liegt quasi als Ausschnitt, in der Dunkelheit gut sichtbar und leicht wahrnehmbar, im Blickfeld des Fahrers. Durch die Anordnung der Lichtmittel in Rahmenelementen des Rahmens in integrierter Weise sind die Lichtmittel geschützt angebracht.

Eine einfache Ausgestaltung der Lichtquelle lässt sich dadurch erreichen, dass die Lichtquelle als LED's ausgebildete Leuchtmittel aufweisen, dass die Lichtquelle in Form eines Leuchtbandes ausgebildet ist.

Um in einfacher Weise nur die Bodenbearbeitungswerkzeuge und deren Arbeitsbereiche sehr einfach ausleuchten zu können, ist vorgesehen dass die Lichtquelle unterhalb und/oder innerhalb des Rahmens in unmittelbarer Nähe des Arbeitsbereiches der Bodenbearbeitungswerkzeuge angeordnet ist.

Um in einfacher Weise nicht auszuleuchtende Bereich gegenüber der Lichtquelle abzuschirmen ist vorgesehen, dass die Lichtquelle so angeordnet und ausgestaltet ist, dass der Bereich oberhalb des Rahmens gegenüber der Lichtquelle mittels Abschirmmittel abgeschirmt ist.

Um die Lichtmittel in einfacher Weise in integrierter Weise an der Arbeitsmaschine anbringen zu können, ist vorgesehen, dass der Rahmen aus Hohlrahmenprofilrohrelementen besteht, dass in den unteren Flächen der Hohlprofilrohrelemente Aussparungen angeordnet sind, dass die Lichtquellen erzeugenden Leuchtmittel in und/oder unmittelbar oberhalb der Aussparungen angeordnet sind.

Weitere Einzelheiten der Erfindung sind der Beispielsbeschreibung und den Zeichnungen zu entnehmen. Hierbei zeigen
- Fig. 1: die als Sämaschine ausgebildete landwirtschaftliche Arbeitsmaschine in Arbeitsstellung und perspektivischer Darstellung,
- Fig. 2: die Arbeitsmaschine gemäß Fig. 1 in der Ansicht von vorn,
- Fig. 3: die Arbeitsmaschine beim Einsatz in der Dunkelheit, in erfindungsgemäßer Beleuchtung der Bodenbearbeitungswerkzeuge und des von dem Bodenbearbeitungswerkzeugen bearbeiteten Bereiches in perspektivischer Darstellung,
- Fig. 4: die Arbeitsmaschine beim Einsatz in der Dunkelheit, in erfindungsgemäßer Beleuchtung der Bodenbearbeitungswerkzeuge und des von den Bodenbearbeitungswerkzeugen bearbeiteten Bereiches in der Ansicht von vorn,
- Fig. 5: der rechte Bereich der Arbeitsmaschine in vergrößertem Maßstab und in der Ansicht von vorn,
- Fig. 6: der rechte Bereich des Rahmens der Arbeitsmaschine gemäß Fig. 5 in vergrößertem Maßstab,
- Fig. 7: den Arbeitsbereich der Arbeitsmaschine in Seitenansicht entsprechend der Ansicht VII/VII,
- Fig. 8: das Rahmenelement des Rahmens nach Fig. 7 in vergrößertem Maßstab,
- Fig. 9: der rechte Bereich der Arbeitsmaschine in vergrößertem Maßstab und in der Ansicht von vorn,
- Fig. 10: die Ansicht des Rahmenelementes in der Ansicht X/X,
- Fig. 11: den Arbeitsbereich der Arbeitsmaschine in Seitenansicht entsprechend der Ansicht VII/VII und
- Fig. 12: das vergrößerte Rahmenelement gemäß Fig. 11.

Die als Sämaschine ausgebildete landwirtschaftliche Arbeitsmaschine weist den Rahmen 1 auf, an dessen Vorderseite die mit einer Zugvorrichtung eines Ackerschleppers koppelbare Zugdeichsel 2 sowie an deren Rückseite das die Laufräder 3 aufweisende Fahrwerk sowie ein Geräterahmen 4 mit daran angeordneten als Säscharen 5 ausgebildeten Bodenbearbeitungswerkzeugen angeordnet sind. Auf dem Rahmen 1 ist ein Vorratsbehälter 6 angeordnet, von dem aus über Dosierorgane und Förder- und Verteileinrichtungen 7 den als Säschare 5 ausgebildeten Bodenbearbeitungswerkzeugen das sich im Vorrasbehälter 6 befindliche Material in einstellbareren Mengen zugeführt wird. Die Säschare 5 sind mittels Halterung an dem als Tragrahmen ausgebildeten Geräterahmen 4, der an dem Rahmen 1 befestigt ist, mittels Halterungen angeordnet. Die Säschare 5 greifen in den Boden ein und ziehen Säschlitze in den Boden, in welche das ihnen zugeführte Material abgelegt wird.

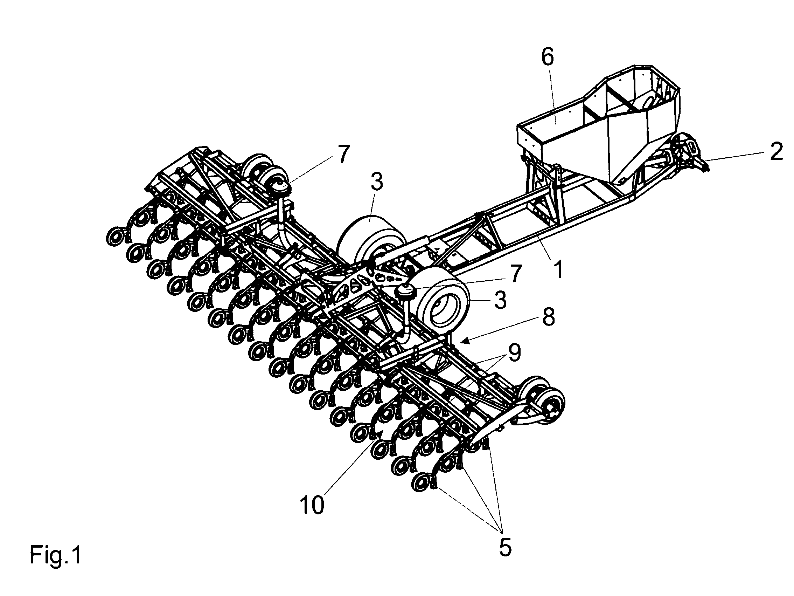

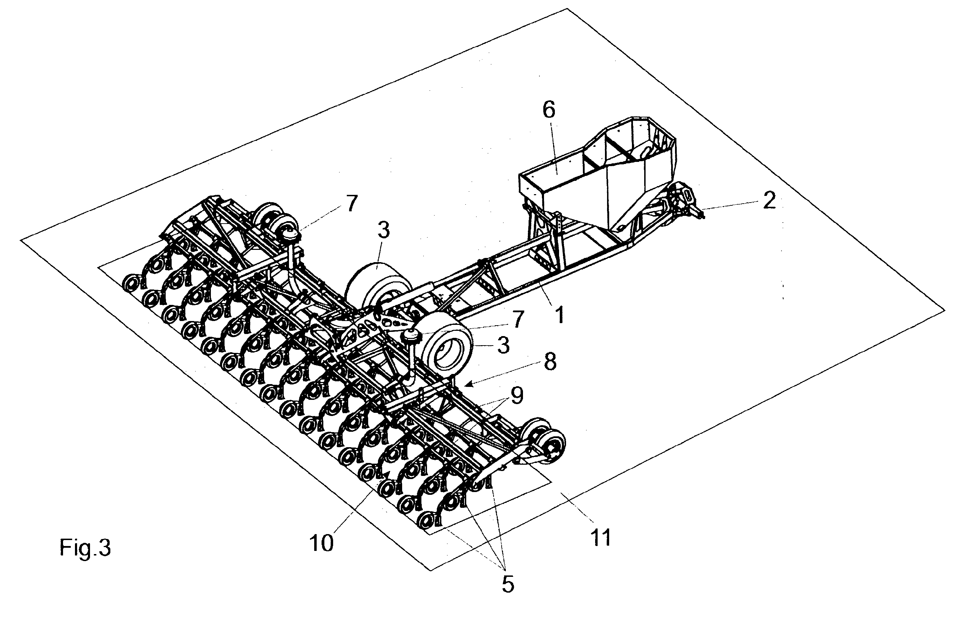

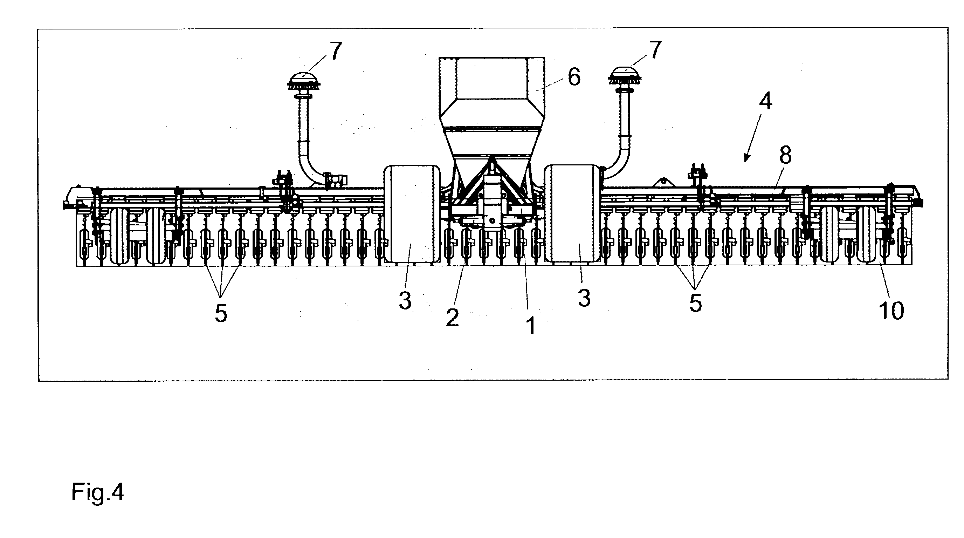

Gemäß den Fig. 1-8 sind an den Rahmenelementen 8 des die Werkzeuge 5 tragenden Tragrahmens 4 Leuchtmittel 9 angeordnet, diese Leuchtmittel 9 sind in geeigneten Leuchthalterungen angeordnet und mittels geeigneter Mittel an den Rahmenelementen 8 auf deren Unterseite in geschützter Weise befestigt. Die Leuchtmittel 9 sind als LED's ausgebildet. Diese Leuchtmittel 9 bilden eine Lichtquelle zur Beleuchtung der Bodenbearbeitungswerkzeuge 5 und deren Arbeitsbereiche 10. Diese Leuchtmittel 9 sind so im Bereich des Rahmens 4 angeordnet, dass nur der Bereich der Bodenbearbeitungswerkzeuge 5 und deren Arbeitsbereiche 10 ausgeleuchtet werden, wie dies in den Fig. 3 und 4 versucht ist darzustellen, in dem der nicht von den Leuchtmitteln 9 beleuchtete Bereich, sowie die nicht beleuchteten Teile der Maschine schattiert dargestellt sind.

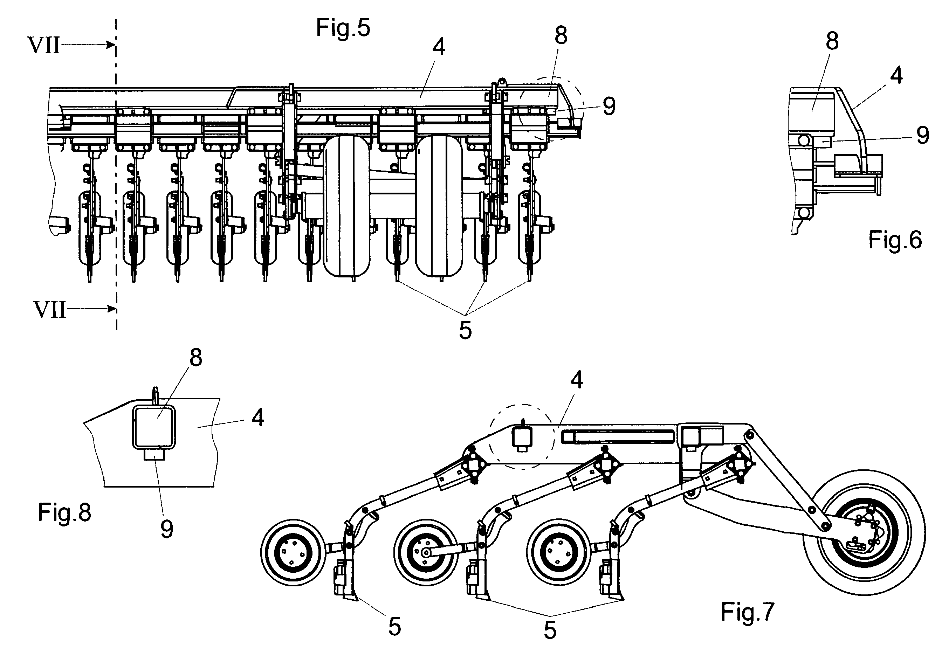

Die als LED's ausgebildeten Leuchtquellen 9 sind in dem Ausführungsbeispiel gemäß den Fig. 5-8 unterhalb des Rahmens 4 und dessen Rahmenelementen 8 in unmittelbarer Nähe des Arbeitsbereiches 10 der Bodenbearbeitungswerkzeuge 5 angeordnet. Hierbei sind die Lichtquellen 9 so angeordnet und ausgestaltet, dass der Bereich oberhalb des Rahmens 4 gegenüber den Lichtquellen 9 mittels Abschirmmitteln, die in diesem Falle durch die Rahmenelemente 8 gebildet werden, abgeschirmt ist.

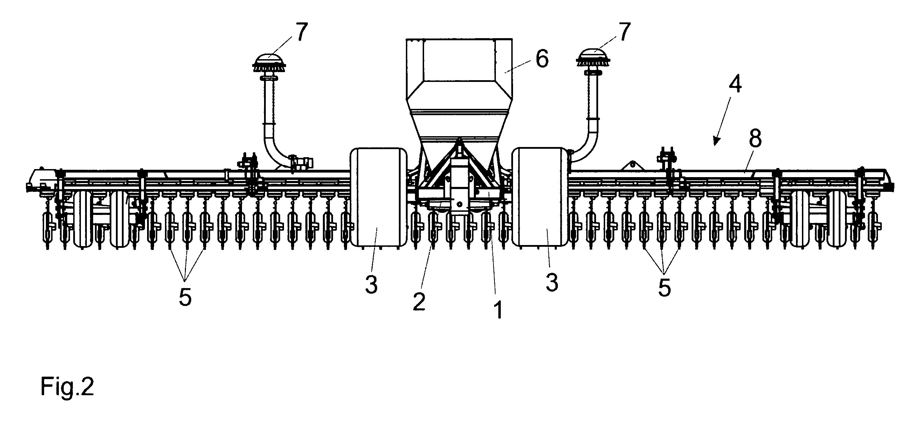

Wie bei der Betrachtung der Fig. 1 und 2 einerseits und der Fig. 3 und 4 andererseits leicht erkennbar ist, sind für den Fahrer des die Arbeitsmaschine ziehenden Schleppers bei dieser erfindungsgemäßen Ausleuchtung nur die Bereiche, in denen die in den Boden eingreifenden Bodenbearbeitungswerkzeuge 5 angeordnet sind, und deren Arbeitsbereiche 10 ausgeleuchtet und somit leichter erkennbar als wenn die gesamte Maschine beleuchtet wäre. Quasi ist durch diese erfindungsgemäße Ausleuchtung, die durch eine entsprechende Anordnung der Leuchtmittel 9 wie vorbeschrieben erreicht wird, der Fokus ausschließlich auf den entscheidenden Bereich bzw. Arbeitsbereich 10 der Maschine gelenkt.

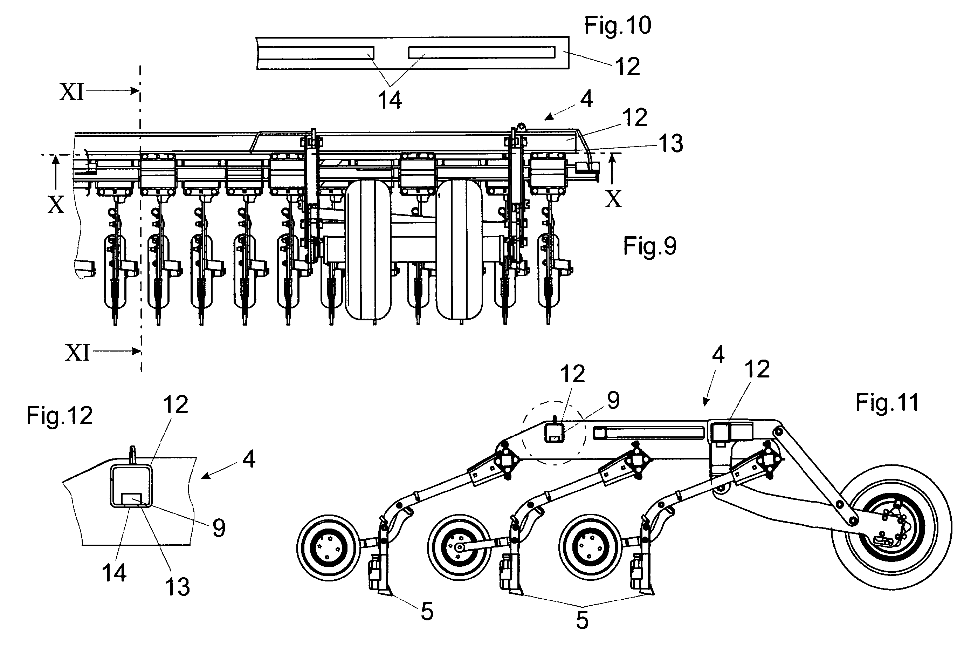

Die Ausgestaltung der Anordnung der Leuchtmittel 9 bei der Arbeitsmaschine gemäß den Fig. 9-12 unterscheidet sich dadurch, dass die Leuchtmittel 9 innerhalb des aus Hohlrahmenprofilelementen 12 bestehenden Rahmens 4 angeordnet sind. Hierbei sind in den unteren Flächen 13 der Hohlprofilrohrelemente 12 Aussparungen 14 angeordnet. Hierbei sind die Lichtquellen erzeugenden Leuchtmittel 9, die ebenfalls in bevorzugter Weise als LED's ausgebildet sind in oder unmittelbar oberhalb der Aussparungen 14 angeordnet. Hierdurch können die Leuchtmittel 9 durch die Aussparungen 14 die Bodenbearbeitungswerkzeuge 5 anleuchten bzw. deren Arbeitsbereich 10 entsprechend in erfindungsgemäßer Weise ausleuchten. Somit sind die Lichtmittel 9 in den Rahmenelementen 8 des Rahmens 4 in integrierter Weise angeordnet.

## Patentansprüche

1. Landwirtschaftliche Bodenbearbeitungswerkzeuge aufweisende Arbeitsmaschine mit einem Rahmen, wobei die Bodenbearbeitungswerkzeuge an dem Rahmen mittels Halterungen angeordnet sind, wobei der Maschine zumindest eine Lichtquelle zur zumindest teilweisen Ausleuchtung des Arbeitsbereiches der Maschine zugeordnet ist, **dadurch gekennzeichnet, dass** die zumindest eine Lichtquelle (9) so im Bereich des Rahmens (4) angeordnet ist, dass nur der Bereich der Bodenbearbeitungswerkzeuge (5) und deren Arbeitsbereiche (10) ausgeleuchtet wird und wobei die Lichtmittel (9) in Rahmenelementen (12) des Rahmens (4) in integrierter Weise angeordnet sind.

2. Arbeitsmaschine nach Anspruch 1, **dadurch gekennzeichnet, dass** die Lichtquelle als LED's ausgebildete Leuchtmittel (9) aufweisen, dass die Lichtquelle (9) in Form eines Leuchtbandes ausgebildet ist.

3. Arbeitsmaschine nach zumindest einem der vorstehenden Ansprüche, **dadurch gekennzeichnet, dass** die Lichtquelle (9) unterhalb und/oder innerhalb des Rahmens (4) in unmittelbarer Nähe des Arbeitsbereiches (10) der Bodenbearbeitungswerkzeuge (5) angeordnet ist.

4. Arbeitsmaschine nach zumindest einem der vorstehenden Ansprüche, **dadurch gekennzeichnet, dass** die Lichtquelle (9) so angeordnet und ausgestaltet ist, dass der Bereich oberhalb des Rahmens (4) gegenüber der Lichtquelle (9) mittels Abschirmmittel (8) abgeschirmt ist.

5. Arbeitsmaschine nach Anspruch 4, **dadurch gekennzeichnet, dass** der Rahmen (4) aus Hohlrahmenprofilrohrelementen (12) besteht, dass in den unteren Flächen (13) der Hohlprofilrohrelemente (12) Aussparungen (14) angeordnet sind, dass die Lichtquellen (9 ) erzeugenden Leuchtmittel in und/oder unmittelbar oberhalb der Aussparungen (14) angeordnet sind.

6. Arbeitsmaschine nach Anspruch 5, **dadurch gekennzeichnet, dass** der Rahmen (4) aus Hohlrahmenprofilrohrelementen (12) besteht, dass in den unteren Flächen (13) der Hohlprofilrohrelemente (12) Aussparungen (14) angeordnet sind, dass die Lichtquellen (9) erzeugenden Leuchtmittel in und/oder unmittelbar oberhalb der Aussparungen (14) angeordnet sind.

## Claims

1. Agricultural machine having soil-working tools and a frame, wherein the soil-working tools are arranged on the frame by means of mounts, wherein the machine is assigned at least one light source for at least partially illuminating the working zone of the machine, **characterized in that** the at least one light source (9) is arranged in the region of the frame (4) in such a way that only the region of the soil-working tools (5) and their working zones (10) is illuminated, wherein the lighting means (9) are arranged in an integrated fashion in frame elements (12) of the frame (4).

2. Machine according to Claim 1, **characterized in that** the light source has lighting means (9) which are embodied as LEDs, with the result that the lighting source (9) is embodied in the form of a light strip.

3. Machine according to at least one of the preceding claims, **characterized in that** the light source (9) is arranged underneath and/or inside the frame (4) in the direct vicinity of the working zone (10) of the soil-working tools (5).

4. Machine according to at least one of the preceding claims, **characterized in that** the light source (9) is arranged and configured in such a way that the region above the frame (4) is screened from the light source (9) by means of screening means (8).

5. Machine according to Claim 4, **characterized in that** the frame (4) is composed of hollow-frame profiled tube elements (12), **in that** cutouts (14) are arranged in the lower faces (13) of the hollow profiled tubular elements (12), and **in that** lighting means which generate the light sources (9) are arranged in and/or directly above the cutouts (14).

6. Machine according to Claim 5, **characterized in that** the frame (4) is composed of hollow-frame profiled tube elements (12), **in that** cutouts (14) are arranged in the lower faces (13) of the hollow profiled tubular elements (12), and **in that** lighting means which generate the light sources (9) are arranged in and/or directly above the cutouts (14).

## Revendications

1. Machine de travail possédant des outils de traitement du sol agricoles comprenant un châssis, les outils de traitement du sol étant disposés sur le châssis au moyen de supports, au moins une source de lumière étant associée à la machine pour éclairer au moins partiellement la zone de travail de la machine, **caractérisée en ce que** ladite source de lumière (9) est disposée dans la zone du châssis (4) de telle sorte que seules sont éclairées la zone des outils de traitement du sol (5) et leurs zones de travail (10), et les moyens lumineux (9) étant disposés de manière intégrée dans des éléments de châssis (12) du châssis (4).

2. Machine de travail selon la revendication 1, **caractérisée en ce que** la source de lumière possède des moyens lumineux (9) réalisés sous la forme de LED, **en ce que** la source de lumière (9) est réalisée sous la forme d'une bande lumineuse.

3. Machine de travail selon au moins l'une des revendications précédentes, **caractérisée en ce que** la source de lumière (9) est disposée au-dessous et/ou à l'intérieur du cadre (4) à proximité immédiate de la zone de travail (10) des outils de traitement du sol (5).

4. Machine de travail selon au moins l'une des revendications précédentes, **caractérisée en ce que** la source de lumière (9) est disposée et configurée de telle sorte que la zone au-dessus du châssis (4) est protégée par rapport à la source de lumière (9) à l'aide de moyens de protection (8).

5. Machine de travail selon la revendication 4, **caractérisée en ce que** le châssis (4) se compose d'éléments tubulaires profilés de châssis creux (12), **en ce que** des cavités (14) sont disposées dans les surfaces inférieures (13) des éléments tubulaires profilés creux (12), **en ce que** les moyens lumineux produisant les sources de lumière (9) sont disposés dans et/ou directement au-dessus des cavités (14).

6. Machine de travail selon la revendication 5, **caractérisée en ce que** le châssis (4) se compose d'éléments tubulaires profilés de châssis creux (12), **en ce que** des cavités (14) sont disposées dans les surfaces inférieures (13) des éléments tubulaires profilés creux (12), **en ce que** les moyens lumineux produisant les sources de lumière (9) sont disposés dans et/ou directement au-dessus des cavités (14).
